# EUROPEAN PATENT APPLICATION

(11) **EP 1 134 959 A2**
(43) Date of publication of application: **19.09.2001**
(21) Application number: 01302144.9
(22) Date of filing: 08.03.2001
(51) Int. Cl.: H04M 3/51

(54) **Personal information verification method in call center**

(30) Priority: 13.03.2000 JP 2000068260
(71) Applicant: Jintec Corporation, Tokyo (JP)
(72) Inventor: Utsumi, Katsunori, Ashigarashimo-gun, Kanagawa (JP)
(74) Representative: Brown, Kenneth Richard

(57) **Abstract**

A 1-chip microcomputer of the present invention has (a) a monitor flag for setting a flag indicating that a specified address space is accessed, (b) an access permission address range setting register, for setting an address range in which an access is permitted while the flag is set, (c) an access permission area detection circuit for judging whether the access is made within the address range thus set, (d) an access permission setting register, for setting whether or not an access with respect to an address other than the address range should be permitted, and (e) memory read-out control circuit and memory writing control circuit for controlling an access with respect to a nonvolatile memory based on a result thus judged and content set by the access permission setting register. With the arrangement, it is possible to provide a 1-chip microcomputer that maintains the security among application programs.

## Description

### BACKGROUND OF THE INVENTION

The present application claims priority upon Japanese Patent Application No. 2000-68260 filed on March 13, 2000, which is herein incorporated by reference.

### Field of the Invention

The present invention relates to a call center which carries out business, such as mail-order/telephone-order trading, customer support or the like, via a telephone. Particularly, the present invention relates to a personal information verification method which is effective in preventing fraud and illegal dealings.

### Description of the Related Art

A call center functions as a customer's contact center via a telephone. In order to conduct accurate and efficient business, such a center adopts a so-called computer-telephony technology and effectively employs a calling-line identity notification function and database technology.

In a large-scale call center, a computer system is configurated by connecting a server and a multitude of operator terminals through a network. Here, each of a multitude of operators talking with a customer via telephone operates his/her operator terminal, respectively. When there is a telephone call from a customer to the call center, the server connects the customer's telephone to an operator free at that time. The server also specifies the customer according to the customer's telephone number acquired by the calling-line identity notification function, or according to a membership-number acquired from the customer through conversation. Then, personal information of the specified-calling customer is taken out from a customer database which the server manages. Then the server works to display the personal information on the operator terminal used by the operator who is talking with the customer. The operator talks with the customer while looking at the customer's personal information displayed on the terminal, proceeds business procedures such as mail-order/telephone-order trading, customer support or the like, and, if required, operates the operator terminal to enter necessary matter to the personal information being displayed.

A typical problem occurring during transaction, such as telephone-order trading or the like, is that payment is not fulfilled even though an item has been sent to a customer. In some telephone-order trading systems, basic personal information, such as name, address, telephone number, date of birth and gender, and in some cases, additional personal information, such as employment and income, are researched and verified when concluding a transaction contract with a customer. Such personal information verified upon sign-up is registered to a database in the call center as a customer list. This list and the personal information therein are used when necessary.

In such a case, it is of significant importance that when personal information, such as the customer's address or telephone number, has changed, such a change is duly and promptly reflected to the customer list. If management of the personal information is not appropriately conducted, in some cases, an inconsistency may occur in a credibility inspection of a customer, and this may cause transaction trouble or bad debts.

Financial institutions such as banks take various steps to research and track credibility information of a customer and to renew such information. Continuous research using time and manpower is extremely effective in preventing transaction trouble or occurrence of bad debt. However, under present circumstances, it is not possible to perform a satisfactory credibility inspection which is cost-effective. Further, in telephone-order trading, since the customers are users living in various regions and who cannot be actually verified by an operator of the trading system, there is a need to contrive a realistic, rational and effective way to prevent occurrence of transaction troubles and bad debts.

### SUMMARY OF THE INVENTION

The present invention has been contrived in view of the above-mentioned problems, and an objective of the present invention is to provide a personal information verification method in a call center which is useful in preventing transaction troubles.

Another objective of the present invention is to provide a method for verifying personal information in a call center carrying out business, such as mail-order/telephone-order trading, customer support or the like, via a telephone. This method focuses on the telephone number among personal information of a customer calling via a telephone in order to promptly detect that a telephone number, formerly registered to a customer database, is out of use, and to thus prevent transaction problems.

A further objective of the present invention is to provide a personal information verification method in a call center comprising: (1) a process of connecting a telephone, called from a customer to the call center, with an operator; (2) a process wherein a telephone number research device sends a SETUP message, which defines a notified telephone number as a called party number and includes a bearer capability information element designating unrestricted digital, audio, or the like, to an ISDN; obtains a message sent in reply thereto from the ISDN and performs a clear sequence; and analyzes the message obtained from the ISDN to determine whether the telephone number is null or not; (3) a process in which if the telephone number is determined to be null, the telephone number research device notifies an operator terminal of such determination; and (4) a process in which the notice, sent to the operator terminal to notify that the telephone number is null, is displayed on a screen of the operator terminal having received the notice, and thereby informed to the operator responding to the customer.

The above-mentioned and other objectives of the present invention and some of the features of the present invention will be more clearly understood through the detailed descriptions given below with reference to the accompanying drawings.

### BRIEF DESCRIPTION OF THE DRAWINGS

For a more complete understanding of the present invention and the advantages thereof, reference is now made to the following description taken in conjunction with the accompanying drawings wherein:
Fig. 1 is a block diagram schematically showing one example of a system configuration of a call center which works the personal information verification method of the present invention; and
Fig. 2 is a flow chart schematically showing an example of a main portion of a telephone number research procedure in the above-mentioned system.

### DETAILED DESCRIPTION OF PREFERRED EMBODIMENTS

### ==Basic Structure of the System==

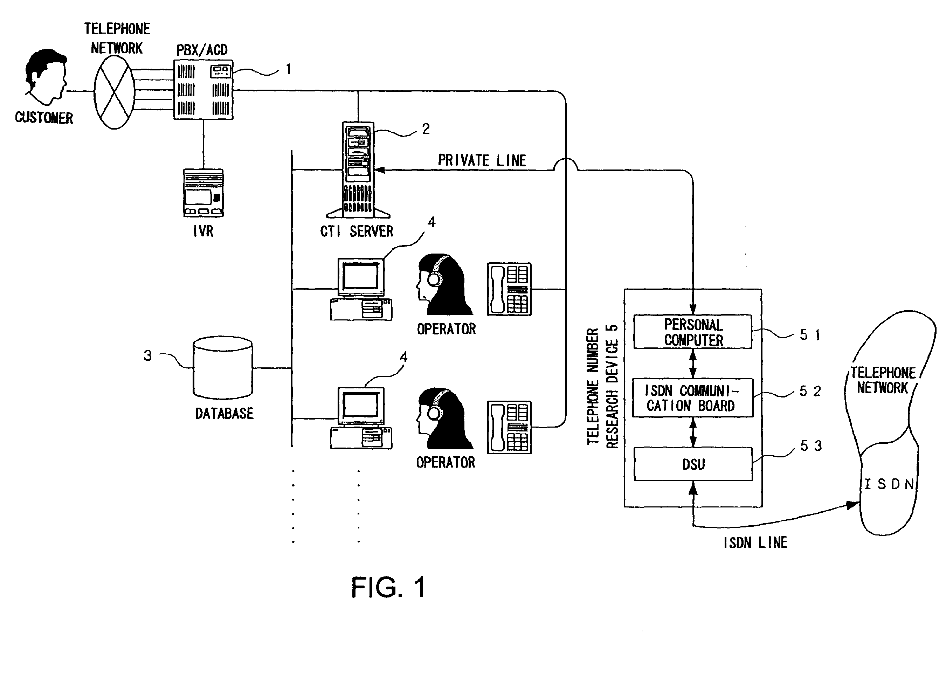

Fig. 1 schematically shows an example of a system configuration working a method according to one embodiment of the present invention. A network system constructing a call center includes a private branch exchanger (PBX) 1, a computer-telephony integration (CTI) server 2, a database server 3, and a multitude of operator terminals 4. The PBX 1 responds to an incoming call of a telephone from a customer calling to the call center. The PBX 1 comprises an automatic call distribution device (ACD), and the customer's telephone is connected to an operator free at that time. The operator talks with the customer through a headset-type telephone, and conducts a customer-responding operation using his/her operator terminal 4.

The operator terminal 4 is a client comprised of a personal computer to which a customer interaction software (CIS) is installed, and cooperates with the CTI server 2 and the database server 3. The operator having started talking with the customer acquires information for specifying the customer, such as a membership number, from the customer through conversation. (This information is herein referred to as "customer ID".) The operator enters the customer ID to the operator terminal 4 and also enters an event to retrieve personal information of the customer. The personal information corresponding to the customer ID is taken out from a customer database managed by the catabase server 3, transferred to the operator terminal 4 having emitted the event, and is displayed on a screen of the operator terminal 4. The operator talks with the customer while looking at the displayed personal information, proceeds a transaction procedure such as phone-order trading (which procedure may be accompanied by a procedure of retrieving additional information, such as details of items being sold, from the database server 3 and displaying the information on the screen of the terminal, if necessary), and enters procedure information, which is necessary for the transaction, to the operator terminal 4.

The CTI server 2 is connected to a telephone number research device 5 via a private line to permit data-communication therebetween. The telephone number research device 5 is mainly constituted of a typical personal computer 51. An ISDN communication board 52 is installed to the computer 51, and the research device 5 is connected to an ISDN line via a digital subscriber unit (DSU) 53. As is well known, an ISDN is integrally and mutually connected to a public telephone network such as an analog telephone network and a mobile telephone network.

### ==Sequence of Research and Verification of Telephone Number==

The CTI server 2 works accordingly with the retrieval of personal information from the customer database of the database server 3 by the operator terminal 4 using a customer ID as a key, and acquires the telephone number of the customer contained in the personal information. This telephone number is a number reported by the customer to be his/her telephone number upon membership sign-up. Along with the procedure of connecting a telephone call from a customer A to an operator B, displaying personal information E of the customer on a screen of an operator terminal D, and starting a customer-responding operation, the telephone number F registered by the customer A is transferred to the research device 5.

The research device 5 automatically conducts a research on whether the received telephone number F is an effective number actually being used, or if it is a null telephone number currently not being used according to a procedure described in detail below. If the telephone number F has been detected to be null, or has been detected to have changed to a different number as a result of the research, such a result is notified to the CTI server 2 immediately. The CTI server 2 notifies the operator terminal D of the operator B, who is talking with the customer A and proceeding with the customer-responding operation, that "the registered telephone number F of the customer A is null". In response to this, a message such as "The registered telephone number F of the customer A that you are serving is null. Please verify the personal information with the customer A." is displayed on the screen of the operator terminal D. Upon seeing this message, the operator B talks with the customer A and asks to "please inform the personal information such as address and telephone number if there have been any changes."

### ==Algorithm of Telephone Number Research==

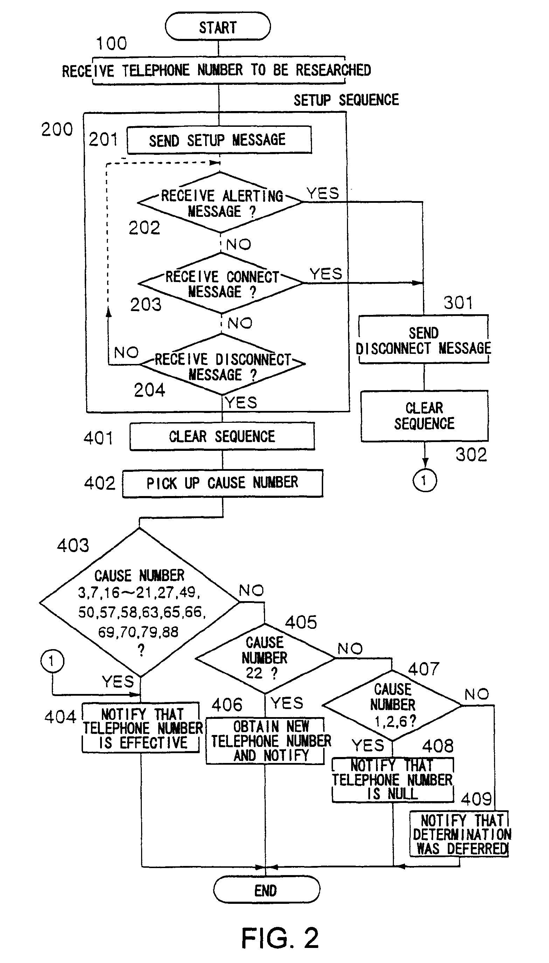

An algorithm of the telephone number research will be sequentially explained below with reference to the flow chart in Fig. 2.

Having received a telephone number and an instruction to conduct a research, the research device 5 carries out the telephone number research procedure shown in the flow chart of Fig. 2. Firstly, a SETUP sequence is started for the received telephone number to be researched (Steps 100→200). In the SETUP sequence, firstly, a SETUP message, which defines the telephone number to be researched as a called party number and which designates "unrestricted digital" or "audio" as a bearer capability information, is created and sent to the network (ISDN) (Step 201). That is, the research device 5 decides whether the telephone number is a number of a mobile phone or not by referring to the first few digits in the string of numbers. If the telephone number is a number of a mobile phone, the bearer capability information is set to "audio". If the telephone number is not a number of a mobile phone, the bearer capability information is set to "unrestricted digital".

In the SETUP sequence 200, the procedure proceeds according to a circuit-switched call control procedure defined in detail in the ITU-T Recommendation Q.931. Detailed description of the circuit-switched call control procedure is omitted in this specification since a number of references provide precise explanation on them. A typical sequence of the procedure is processed as follows.

The network, which received the SETUP message from the calling terminal (research device 5), sends a CALL PROCEEDING message to the calling terminal, reporting a selected B-channel, and also sends the SETUP message to a called terminal. Through this process, various capabilities required to the called terminal are designated. The called terminal side checks the required capabilities. When the called terminal confirms the compatibility, the called terminal returns an ALERTING message to the network (i.e., the called terminal is alerted). The network sends this ALERTING message to the calling terminal. If the called terminal responds by such as an off-hook action, a CONNECT message is sent to the calling terminal from the called terminal via the network. Then a CONNECT ACKNOWLEDGE message is sent from the calling terminal to the network, and from the network to the called terminal in response to the CONNECT message. According to the above sequence, the SETUP message is accepted, and connection between the two terminals is verified.

In some cases, a call requested from the calling terminal may not be accepted for various reasons. The network sends a DISCONNECT message to the calling terminal to perform a clearing sequence for those cases. The reason why the call was not accepted is reported to the calling terminal as a cause number in a cause of an information element attached to the DISCONNECT message sent to the calling terminal from the network.

### ==Cause in a DISCONNECT message==

In the ITU-T Recommendation Q.931, classes and numbers of cause displays attached to DISCONNECT messages are defined as follows.

### 1. Normal class

[Cause No. 1 - Unallocated (unassigned) number]
   This cause indicates that the called party cannot be reached because, although the called party number is in a valid format, it is not currently allocated (assigned).
[Cause No. 2 - No route to specified transit network]
   This cause indicates that the equipment sending this cause has received a request to route the call through a particular transit network which it does not recognize. The equipment sending this cause does not recognize the transit network either because the transit network does not exist or because that particular transit network, while it does exist, does not serve the equipment which is sending this cause.
[Cause No. 3 - No route to destination]
   This cause indicates that the called party cannot be reached because the network through which the call has been routed does not serve the destination desired.
[Cause No. 6 - Channel unacceptable]
   This cause indicates that the channel selected as a result of channel selecting is not acceptable to the calling party.
[Cause No. 7 - Call awarded and being delivered in an established channel]
   This cause indicates that the user has been awarded the incoming call, and that the incoming call is being connected to a channel already established to that user for similar calls (e.g. packet-mode X.25 virtual calls).
[Cause No. 16 - Normal call clearing]
   This cause indicates that the call is being cleared because one of the users involved in the call has requested that the call be cleared. Under normal situations, the source of this cause is not the network.
[Cause No. 17 - User busy]
   This cause is used to indicate that the called party is unable to accept another call because the user busy condition has been encountered. In this case, it is noted that the user equipment is compatible with the call.
[Cause No. 18 - No user responding]
   This cause is used when a called party does not respond to a call establishment message with either an alerting or connect indication within the prescribed period of time allocated (Expiry of the timer T303 or T310 defined in the Recommendation).
[Cause No. 19 - No answer from user (user alerted)]
   This cause is used when the called party has been alerted but does not respond with a connect indication within a prescribed period of time. This cause is not necessarily generated by JT-Q931 procedures but may be generated by internal network timers.
[Cause No. 20 - Subscriber absent]
   This cause value is used when a mobile station has logged off with a signaling procedure through a radio bus, or a radio communication is unable to establish with a mobile station (due to interference, out of range, power off, and so forth).
[Cause No. 21 - Call rejected]
   This cause indicates that the equipment sending this cause does not wish to accept this call, although it could have accepted the call because the equipment sending this cause is neither busy nor incompatible.
[Cause No. 22 - Number changed]
   This cause is returned to a calling party when the called party number indicated by the calling party is no longer assigned. The new called party number may optionally be included in the diagnostic field.
[Cause No. 26 - Non-selected user clearing]
   This cause indicates that the user has not been awarded the incoming call.
[Cause No. 27 - Destination out of order]
   This cause indicates that the destination indicated by the user cannot be reached because the interface to the destination is not functioning correctly. The term "not functioning correctly" indicates that a signaling message was unable to be delivered to the remote party; e.g. a physical layer or data link layer failure at the remote party, or user equipment off-line.
[Cause No. 28 - Invalid number format (address incomplete)
   This cause indicates that the called party cannot be reached because the called party number is not in a valid format or is not complete.
[Cause No. 29 - Facility rejected]
   This cause is returned when the network cannot provide a facility requested by the user.
[Cause No. 30 - Response to STATUS ENQUIRY]
   This cause is included in the STATUS message when the reason for generating the STATUS message was the prior receipt of a STATUS ENQUIRY message.
[Cause No. 31 - Normal, unspecified]
   This cause is used to report a normal event only when no other cause in the normal class applies.

### 2. Resource unavailable class

[Cause No. 34 - No circuit/channel available]
   This cause indicates that there is no appropriate circuit/channel presently available to handle the call.
[Cause No. 38 - Network out of order]
   This cause indicates that the network is not functioning correctly and that the condition is likely to last a relatively long period of time; e.g. immediately re-attempting the call is not likely to be successful.
[Cause No. 41 - Temporary failure]
   This cause indicates that the network is not functioning correctly and that the condition is not likely to last a long period of time; e.g. the user may wish to try another call attempt almost immediately.
[Cause No. 42 - Switching equipment congestion]
   This cause indicates that the switching equipment generating this cause is experiencing a period of high traffic.
[Cause No. 43 - Access information discarded]
   This cause indicates that the network could not deliver access information to the remote user as requested, i.e. user-to-user information, low layer compatibility, high layer compatibility, or sub-address, as indicated in the diagnostic. It is noted that the particular type of access information discarded is optionally included in the diagnostic.
[Cause No. 44 - Requested circuit/channel not available]
   This cause is returned when the circuit or channel indicated by the requesting entity cannot be provided by the other side of the interface.
[Cause No. 47 - Resource unavailable, unspecified]
   This cause is used to report a network congestion event only when no other cause in the network congestion class applies.

### 3. Service or option unavailable class

[Cause No. 49 - QOS not available]
   This cause is used to report that the requested QOS, as defined in Recommendation X.213, cannot be provided (e.g. throughput or transit delay cannot be supported).
[Cause No. 50 - Requested facility not subscribed]
   This cause indicates that the supplementary service requested is not provided by the network because the user has not completed the necessary procedure for administration.
[Cause No. 57 - Bearer capability not authorized]
   This cause indicates that the user has requested a bearer capability which is implemented by the equipment which generated this cause but the user is not authorized to use.
[Cause No. 58 - Bearer capability not presently available]
   This cause indicates that the user has requested a bearer capability which is implemented by the equipment which generated this cause but which is not available at this time.
[Cause No. 63 - Service or option not available, unspecified]
   This cause is used to report a service or option not available event only when no other cause in the service or option not available class applies.

### 4. Service not implemented class

[Cause No. 65 - Bearer capability not implemented]
   This cause indicates that the equipment sending this cause does not support the bearer capability requested.
[Cause No. 66 - Channel type not implemented]
   This cause indicates that the equipment sending this cause does not support the channel type requested.
[Cause No. 69 - Requested facility mot implemented]
   This cause indicates that the equipment sending this cause does not support the requested supplementary service.
[Cause No. 70 - Only restricted digital information bearer capability is available]
   This cause indicates that an equipment has requested an unrestricted bearer service but that the equipment sending this cause only supports the restricted version of the requested bearer capability.
[Cause No. 79 - Service or option not implemented, unspecified]
   This cause is used to report a service or cption not implemented event only when no other cause in the service or option not implemented class applies.

### 5. Invalid message class

[Cause No. 81 - Invalid call reference value]
   This cause indicates that the equipment sending this cause has received a message with a call reference which is not currently in use on the user-network interface.
[Cause No. 82 - Invalid channel number]
   This cause indicates that the equipment sending this cause has received a request to use a channel not activated on the interface for a call. For example, if a user has subscribed to those channels numbered from 1 to 12 and the user equipment or the network attempts to use channels 13 through 23, this cause is generated.
[Cause No. 83 - A suspended call exists, but this call identity is not in use]
   This cause indicates that a call resume has been attempted with a call identity which differs from that in use for any presently suspended call(s).
[Cause No. 84 - Suspended call identity in use]
   This cause indicates that the network has received a call suspended request containing a call identity (including the null call identity) which is already in use for a suspended call within the domain of interfaces over which the call might be resumed.
[Cause No. 85 - No call suspended]
   This cause indicates that the network has received a call resume request containing a call identity information element which presently does not indicate any suspended call within the domain of interfaces over which calls may be resumed.
[Cause No. 86 - Call having the requested call identity has been cleared]
   This cause indicates that the network has received a call resume request containing a call identity information element indicating a suspended call that has in the meantime been cleared while suspended (either by network time-out or by the remote user).
[Cause No. 87 - User not member of CUG]
   See the specification of a supplementary service.
[Cause No. 88 ― Incompatible destination]
   This cause indicates that the equipment sending this cause has received a request to establish a call which has low layer compatibility, high layer compatibility, or other compatibility attributes (e.g. data rate) which cannot be accommodated.
[Cause No. 91 - Invalid transit network selection]
   This cause indicates that a transit network identification was received which is of an incorrect format as defined separately.
[Cause No. 95 - Invalid message, unspecified]
   This cause is used to report a null message event only when no other cause in the null message class applies.

### 6. Protocol error (e.g. unknown message) class

[Cause No. 96 - Mandatory information element is missing.
   This cause indicates that the equipment sending this cause has received a message which is missing an information element which must be present in the message (a mandatory information element) before that message can be processed.
[Cause No. 97 - Message type non-existent or not implemented]
   This cause indicates that the equipment sending this cause has received a message with a message type it does not recognize either because this is a message not defined or defined but not implemented by the equipment sending this cause.
[Cause No. 98 - Message not compatible with call state or message type non-existent]
   This cause indicates that the equipment sending this cause has received a message such that the procedures do not indicate that this is a permissible message to receive while in the call state, or a STATUS message was received indicating an incompatible call state.
[Cause No. 99 - Information element non-existent
   This cause indicates that the equipment sending this cause has received a message which includes information element(s) not recognized because the information element identifier (s) are not defined or are defined but not implemented by the equipment sending the cause. However, the information element is not required to be present in the message in order for the equipment sending the cause to process the message.
[Cause No. 100 - Invalid information element contents]
   This cause indicates that the equipment sending this cause has received an information element which it has implemented; however, one or more fields in the information element are coded in such a way which has not been implemented by the equipment sending this cause.
[Cause No. 101 - Message not compatible with call state]
   This cause indicates that a message has been received which is incompatible with the call state.
[Cause No. 102 - Recovery on timer expiry]
   This cause indicates that a procedure has been initiated by the expiry of a timer in association with error handling procedures of the layer 3 specification.
[Cause No. 111 - Protocol error, unspecified]
   This cause is used to report a protocol error event cnly when no other cause in the protocol error class applies.

### 7. Interworking class

### [Cause No. 127 - interworking, unspecified]

This cause indicates that there has been interworking with a network which does not provide causes for actions it takes. Thus, the precise cause for a message which is being sent cannot be ascertained.

### ==Determination of Effectiveness of Telephone Number==

In the research procedure by the telephone number research device 5 as shown in the flow chart in Fig. 2, when the network has received a call including a SETUP message sent by the telephone number research device 5 and sends back an ALERTING or CONNECT message in the SETUP sequence 200, the step 202 or 203 to steps 301→302→404 are processed. Then, the telephone number research device 5 immediately sends a DISCONNECT message to the network to perform a clear sequence, and the telephone number in the SETUP message is determined effective, and also notifies the CTI server 2 of the result that the researched telephone number was effective.

When a DISCONNECT message is sent by the network because the SETUP message sent by the calling party (i.e., the telephone number research device 5) is not accepted in the setup sequence 200, the step 204 to steps 401→402 are processed. The calling party immediately performs a clear sequence and picks up a cause number of the information element attached to the DISCONNECT message sent by the network. The telephone number in the SETUP message is determined either effective, null, or deferred, according to the cause.
(a) Effective telephone numbers
   If the cause number picked up in step 402 conforms to either of the following, the telephone number in the SETUP message is determined effective and the result is notified to the CTI server 2 (Steps 403→404).
   [Cause No. 3 - No route to destination]
   [Cause No. 7 - Call awarded and being delivered in an established channel]
   [Cause No. 16 - Normal call clearing]
   [Cause No. 17 - User busy]
   [Cause No. 18 - No user responding]
   [Cause No. 19 - No answer from user (user alerted)]
   [Cause No. 20 - Subscriber absent]
   [Cause No. 21 - Call rejected]
   [Cause No. 27 - Destination out of order]
   [Cause No. 49 - QOS not available]
   [Cause No. 50 - Requested facility not subscribed]
   [Cause No. 57 - Bearer capability not authorized]
   [Cause No. 58 - Bearer capability not presently available]
   [Cause No. 63 - Service or option not available, unspecified]
   [Cause No. 65 - Bearer capability not implemented]
   [Cause No. 66 - Channel type not implemented]
   [Cause No. 69 - Requested facility not implemented]
   [Cause No. 70 - Only restricted digital information bearer]
   [Cause No. 79 - Service or option not implemented, unspecified]
   [Cause No. 88 - Incompatible destination]
(b) Number changed
   When the cause number picked up in step 402 corresponds to [Cause No. 22 - Number changed], a new telephone number contained in a diagnosis information field of the cause is retrieved, and the CTI server 2 is notified that the registered telephone number has been changed to the new telephcne number (Steps 403→405→406
(c) Null telephone number
   If the cause number picked up in step 402 conforms to either of the following ones, the telephone mumber in the SETUP message is determined null, and the CTI server 2 is notified that the telephone number is null (Steps 403→405→407→408).
   [Cause No. 1 - Unallocated (unassigned number]
   [Cause No. 2 - No route to specifised transit network]
   [Cause No. 6 - Channel unacceptable]

   It is also possible to adopt a method in which the telephone number research device 5 conducts the above-mentioned research procedure not only once to come to a conclusion that the telephone number is null, but conducts a second research procedure after an appropriate short interval, and notifies the CTI server 2 of the result only when the telephone number is again determined to be null.
(d) Determination deferred

If the cause number picked up in step 402 dees not correspond to either of the cause numbers depicted in any of steps 403, 405, or 407, the telephone number in the SETUP message is not determined either effective or null, and the CTI server 2 is notified that the determination has been deferred (Steps 403→405→407→409).

### ==Situation of Actual Operation==

Customers calling a call center are ordinary people, and the telephone numbers registered to a customer database include numbers of subscribers to an analog telephone network, numbers of subscribers to an ISDN, numbers of subscribers to a mobile phone network, and numbers of subscribers to a PHS network. In case that the telephone number list in this current situation is researched through the above procedure, the following communications will be made between the research device 5 and the ISDN station (the network).
(A) Called party number is an effective subscriber number of an analog telephone network
   The telephone number research device 5 sends a SETUP message containing an "unrestricted digital" information designated as a bearer capability, and thus the network sends back a DISCONNECT message having [Cause No. 3 - No route to destination]. Therefore, the telephone number is determined to be an "effective telephone number". Attention should be directed to the fact that the called party which is designated by the telephone number to be checked is never alerted during checking and determination of the number. In other words, from the called party's point of view, which has the number to be checked, the called party is never annoyed by a useless call to which the called party is compelled to respond.
(B) The called party number is an effective subscriber number to an ISDN or a PHS
   In this case, mode of communication between two parties depends on the condition of the facility at the called party. The called terminal (called party) is alerted by the CALLING message sent from the telephone number research device 5. If the called party responds the alert, step 301 is processed in the flow chart in Fig. 2. The telephone number research device 5 starts a clear sequence and determines the telephone number to be effective. In case that a DISCONNECT message is sent back from the network, if the cause number in the DISCONNECT message conforms to either of #7, #16, #17, #18, #19, #20, #21, #27, #49, #50, #57, #58, #63, #65, #66, #70, #79, the called party number is determined to be effective; and if the cause number corresponds to #2 or #6, the called party number is determined to be null. If the cause number in the DISCONNECT message does not corresponds to any of the above cause numbers, the determination is deferred.
   It should be noted that the ways of classifying the called party number into the categories "effective", "null", or "deferred" according to the cause number may not be best described in the preferred embodiment. It may be more appropriate to classify some cause in "effective" or "null" than in "deferred", based on more precise investigation of usage of an ISDN by the subscribers and response of the network to the subscribers. The present invention would never restrict such flexible operations.
(C) Called party number is an effective subscriber number to a mobile phone
   The telephone number research device 5 sends a SETUP message containing "audio" information designated as a bearer capability. The mobile phone network sends an ALERTING signal to the called terminal (i.e., the mobile phone), and also sends an ALERTING message back to the telephone number research device 5. If the called terminal is off-hooked, the network sends a CONNECT message back to the telephone number research device 5. As soon as the telephone number research device 5 receives the ALERTING message or the CONNECT message from the network, the device 5 sends a DISCONNECT message to the network to conduct a clear sequence. At the same time, the device 5 determines the called telephone number to be an effective number. Thus, in some cases, the called terminal is rung for an instant. However, since the line is immediately disconnected, it is possible to minimize the annoyance put to a user of the called terminal. When "3.1 audio" is set as the bearer capability, the same operation will be carried out. Therefore, in the present specification, the bearer capability of "audio" and the bearer capability of "3.1 audio" are regarded as equivalent.
(D) Called party number has changed
   In this case, the network sends back a DISCONNECT message containing [Cause No. 22 - Number changed], without respect to the fact whether the subscriber number is of an analog telephone network, an ISDN, a mobile phone network, or a PHS network. The telephone number research device 5 receives the message and picks up a new telephone number contained in a diagnosis information field of the cause, and notifies the CTI server 2 of the new telephone number.
(E) The called party number is not currently in use

In this case, the network sends back a DISCONNECT message containing [Cause No. 1 - Unallocated (unassigned) number], without respect to the fact whether the subscriber number is of an analog telephone network, an ISDN, a mobile phone network, or a PHS network. The telephone number research device 5 receives the message, and determines that the telephone number is null.

### ==Procedure After Receiving the Notice of Research Result==

When receiving a notice that the "telephone number is effective", the CTI server 2 may not cause any special action, or may keep a record that the telephone number of the customer was determined effective on the specific research date. When receiving a notice that "the telephone number has changed to a new number", the CTI server 2 works to make the appropriate operator terminal 4 display a message instructing the operator to make the customer contrast and confirm the old telephone number and new telephone number. When receiving a notice that "the telephone number is null", the CTI server 2 works to make the appropriate operator terminal 4 display a message instructing the operator to inquire the customer of his/her personal information since the telephone number is not in use.

### ==Other Embodiments==

There is known a call center with the following system configuration. That is, an interactive voice response device (IVR) is provided to work together with the ACD in the PBX 1, and firstly, the IVR device automatically responds to the telephone call made from the customer to the call center and makes the customer enter his/her customer ID through the operation of a telephone keyboard (or makes the customer enter the customer ID by voice) . Then the IVR device connets the customer's telephone to an operator, and notifies personal information obtained from a database, using the customer ID as a key, to an operator terminal. If the present invention is to be applied to such a system, the configuration would be such that, in the step of taking out the personal information of the customer from the database using the customer ID obtained by the IVR device as a key, the CTI server 2 notifies the telephone number research device 5 of the telephone number contained in the personal information, and makes the device 5 conduct a research. The procedure after receiving the research result is the same as that of the above-mentioned embodiment.

Further, a system may be configurated on the premise that a customer will call the call center from a telephone with a telephone number registered to the customer database. In such a system, it is possible to adopt the following mechanism using the calling-line identity notification function. The PBX 1 obtains the telephone number of the calling party upon responding to an incoming call, searches the customer database using the obtained telephone number regarding this as information for specifying the customer, and determines whether the certain customer is registered or not. If it is found that the telephone call is from a registered customer, the telephone is connected to an operator, and also, the personal information of the customer is taken out from the database and notified to the operator terminal. The personal information registered by the customer contains several telephone numbers such as the telephone number for a telephone at home or at office, or a telephone number of a mobile phone. The customer is calling the call center from a telephone having one of the telephone numbers listed above. Thus, the telephone number research device 5 researches whether the registered telephone numbers, other than the number of the telephone currently being used, is effective or null.

In other words, the corresponding personal information is taken out from the customer database using the calling-party number of the telephone currently calling the call center as a key. Then, the telephone numbers in the personal information other than the calling-party number are notified from the CTI server 2 to the telephone number research device 5, and a research considering effectiveness of the numbers is conducted. A research result is instantly notified to the CTI server 2, and if the result notice is such that a researched telephone number is null or has been changed, the CTI server 2 works to display a message as described above on the screen of the terminal 4 of the operator who is responding to the customer, as in the above-described examples.

In the present embodiment, among the personal information of the customer calling the call center, the telephone number of the customer is focused upon to promptly detect that a previously-registered telephone number is not currently used, and to thus prevent transaction troubles. In particular, during the process in which a customer is talking with an operator at the call center to actually conduct a transaction procedure, a customer whose personal information may have changed is detected, his/her personal information is verified, and, if necessary, the customer is made to immediately inform any change in his/her data. Therefore, it is possible to considerably shorten the period of time from when the personal information of the customer was actually changed to when such change of information is reflected to the customer database. Thus, it is possible to reduce transaction trouble in this sense also.

Although the preferred embodiment of the present invention has been described in detail, it should be understood that various changes, substitutions and alternations can be made therein without departing from spirit and scope of the inventions as defined by the appended claims.

## Claims

1. A personal information verification method in a call center comprising:
(1) a process of connecting a telephone, called from a customer A to the call center, with an operator B;
(2) a process wherein the operator B enters customer-specifying information C, obtained from the customer A through conversation, to an operator terminal D;
(3) a process wherein personal information E corresponding to the customer A is taken out from a customer database based on the customer-specifying information C entered to the operator terminal D; the personal information E is displayed on a screen of the operator terminal D; and a telephone number F of the customer A contained in the personal information E is notified to a telephone number research device G;
(4) a process wherein the telephone number research device G
sends a SETUP message, which defines the notifred telephone number F as a called party number and includes a bearer capability information element designating unrestricted digital, audio, or the like, to an ISDN;
obtains a message sent in reply thereto from the ISDN and performs a clear sequence; and
analyzes the message obtained from the ISDN to determine whether the telephone number F is null or not;
(5) a process in which if the telephone number F is determined to be null, the telephone number research device G notifies the operator terminal D of such determination; and
(6) a process in which the notice, sent to the operator terminal D to notify that the telephone number F is null, is displayed on the screen of the operator terminal D having received the notice, and thereby informed to the operator B responding to the customer A.

2. A personal information verification method in a call center comprising:
(1) a process in which an interactive voice response device responds to a telephone called from a customer A to the call center, and obtains a customer-specifying information C from the customer A;
(2) a process in which the telephone from the customer A is connected to an operator 3;
(3) a process wherein a server in the call center
takes out personal information E corresponding to the customer A from a customer database bases on said customer-specifying information C;
displays the personal information E on a screen of an operator terminal D of the operator B; and
notifies a telephone number F of the customer A contained in the personal information E to a telephone number research device G;
(4) a process wherein the telephone nmaber research device G
sends a SETUP message, which defines the notified telephone number F as a called party number and includes a bearer capability information element designating unrestricted digital, audio, or the like, to an ISDN;
obtains a message sent in reply thereto from the ISDN and performs a clear sequence; and
analyzes the message obtained from the ISDN to determine whether the telephone number F is null or not;
(5) a process in which if the telephone number F is determined to be null, the telephone number research device G notifies the operator terminal D of such determination; and
(6) a process in which the notice, sent to the operator terminal D to notify that the telephone number F is null, is displayed on the screen of the operator terminal D having received the notice, and thereby informed to the operator B responding to the customer A.

3. A personal information verification method in a call center comprising:
(1) a process of connecting a telephone, called from a customer A to the call center, with an operator B;
(2) a process wherein a server in the call center
obtains a telephone number C of the telephone from the customer A;
takes out personal information E corresponding to the customer A from a customer database based on said telephone number C;
displays the personal information E on a screen of an operator terminal D of the operator B; and
notifies, to a telephone number research device G, one or more telephone numbers F of the customer A, except for the telephone number C, among a plurality of telephone numbers of the customer A contained in the personal information E;
(3) a process wherein the telephone number research device G
sends a SETUP message, which defines the notified telephone number F as a called party number and includes a bearer capability information element designating unrestricted digital, audio, or the like, to an ISDN;
obtains a message sent in reply thereto from the ISDN and performs a clear sequence; and
analyzes the message obtained from the ISDN to determine whether the telephone number F is null or not;
(4) a process in which if the telephone number F is determined to be null, the telephone number research device G notifies the operator terminal D of such determination; and
(5)a process in which the notice, sent to the operator terminal D to notify that the telephone number F is null, is displayed on the screen of the operator terminal D having received the notice, and thereby informed to the operator B responding to the customer A.

4. A personal information verification method in a call center comprising:
(1) a process of connecting a telephone, called from a customer A to the call center, with an operator B;
(2) a process wherein a telephone number research device G
sends a SETUP message, which defines a notified telephone number P as a called party number and includes a bearer capability information element designating unrestricted digital, audio, or the like, to an ISDN;
obtains a message sent in reply thereto from the ISDN and performs a clear sequence; and
analyzes the message obtained from the ISDN to determine whether the telephone number P is null or not;
(3) a process in which if the telephone number P is determined to be null, the telephone number research device G notifies an operator terminal D of such determination; and
(4) a process in which the notice, sent to the operator terminal D to notify that the telephone number P is null, is displayed on a screen of the operator terminal D having received the notice, and thereby informed to the operator B responding to the customer A.

5. A method of verifying personal information in a call centre upon receipt of a customer telephone call, the method including the steps of
(1) obtaining through the telephone call customer-related information;
(2) obtaining from a customer database containing personal information for registered customers, the said personal information associated with the customer-related information obtained in step (1);
(3) extracting a telephone number from the personal information obtained in step (2);
(4) causing a telephone number research device to perform a telephone number checking procedure which establishes whether said telephone number is null or not; and
(5) automatically providing a notification dependent upon the result of the telephone number checking procedure of step (4).

6. A method according to claim 5 wherein in said step (5), said operation is automatically notified if in step (4) the telephone number is established as null.
